# EUROPÄISCHE PATENTSCHRIFT

(11) **EP 2 862 319 B1**
(45) Veröffentlichungstag und Bekanntmachung des Hinweises auf die Patenterteilung: **25.03.2020**
(21) Anmeldenummer: 13731048.8
(22) Anmeldetag: 10.06.2013
(51) Int. Cl.: H04L 12/437

(54) **RINGFÖRMIGES NETZWERK FÜR EIN FAHRZEUG**
RING NETWORK FOR A VEHICLE
RÉSEAU EN ANNEAU POUR VÉHICULE

(30) Priorität: 14.06.2012 DE 102012210057
(43) Veröffentlichungstag der Anmeldung: 22.04.2015
(73) Patentinhaber: Continental Automotive GmbH, 30165 Hannover (DE)
(72) Erfinder: ROSS, Hans-Leo, 64653 Lorsch (DE)
(86) Internationale Anmeldenummer: PCT/EP2013/061881
(87) Internationale Veröffentlichungsnummer: WO 2013/186154

(56) Entgegenhaltungen:
- EP-A1- 2 309 678
- WO-A2-2005/053223
- US-B1- 6 680 912

## Beschreibung

Die vorliegende Erfindung betrifft ein ringförmiges, vorzugsweise auf Ethernet-basierendes Netzwerk zum Datenaustausch zwischen mehreren in einem Fahrzeug angeordneten Steuergeräten sowie ein Fahrzeug, in das ein derartiges Netzwerk eingebunden ist.

Moderne Fahrzeuge benötigen immer stärker eine ständig verfügbare Kommunikationsarchitektur, die auch im Fehlerfall die Fahrzeugsicherheit gewährleisten kann. Bislang verwendete Kommunikationssysteme weisen häufig Mängel auf hinsichtlich Geschwindigkeit, Datenmengen oder Beschränkung der Netzteilnehmer, also beispielsweise von Knoten im Netzwerk. Auch bei einer Verwendung mehrerer oder auch redundanter Busse im Netzwerk bestehen Probleme dadurch, dass Daten zwischen den Bussen nur über einzelne Rechner oder Steuergeräte ausgetauscht werden können. Bei redundanten Bussen ist es außerdem problematisch, die Datenflüsse zu synchronisieren.

Aufgrund einer hohen Datenmenge und einer hohen Anzahl der Steuergeräte in den Fahrzeugen wird eine stetig steigende Verfügbarkeit der Kommunikation zwischen den Steuergeräten gefordert. Da Komplexität (z. B. eine Anzahl von Funktionen in einem Steuergerät) und Dynamik in den Fahrzeugen kontinuierlich steigen, werden auch die Reaktionszeiten der vernetzten Systeme immer zeitkritischer. Wegen der Vielzahl von abhängigen Aktuatoren im Fahrzeug müssen sämtliche Daten für alle Steuergeräte in sehr kurzen Zeitintervallen, typischerweise im Bereich von Millisekunden, sicher verfügbar sein, da andernfalls eine Funktionssicherheit für moderne Fahrzeugfunktionen nicht mehr gewährleistet werden kann. Es ist zu erwarten, dass die Anforderungen an vernetzte Systeme aufgrund zunehmender E-Mobilität weiter steigen und damit die Abhängigkeit der Funktionen wachsen. Beispielsweise benötigen Konzepte des "Steer-by-wire" oder des "Brake-by-wire" hochverfügbare Sicherheitsnetzwerke, damit auch im Fehlerfall eine sichere Funktion gewährleistet ist. Um eine hinreichende Funktionssicherheit zu gewährleisten, müssen die Datenflüsse somit einen gewissen Determinismus aufweisen, damit Daten in einem definierten Zeitraum auch zu dem empfangenden Steuergerät sicher übertragen werden. Somit kann eine sichere Echtzeitfähigkeit gewährleistet werden, die dafür sorgt, dass das Steuergerät auch mit aktuellen Daten arbeitet.

Aus dem Stand der Technik sind daher Lösungen bekannt, bei denen die einzelnen Steuergeräte über Verteiler mit dem Netzwerk verbunden sind, wobei zur vereinfachten Ansteuerung des Netzwerks eine Datenflussrichtung innerhalb des Netzwerks vorgegeben ist. Dies weist allerdings den Nachteil auf, dass bei einer Unterbrechung des Netzwerks der Datenfluss nicht mehr gewährleistet ist und nicht mehr alle Steuergeräte bzw. nicht mehr alle Aktuatoren erreichbar sind.
Aus der EP 2 309 678 A1 ist ein ringförmiges Ethernet Netzwerk bekannt.

Aus der WO 2005/053223 A2 und der US6680912 ist ein Netzwerk bekannt, das auch bei Leitungsunterbrechungen noch funktionsfähig bleibt.

Der vorliegenden Erfindung liegt damit die Aufgabe zugrunde, ein Netzwerk für ein Fahrzeug vorzuschlagen, das die genannten Nachteile vermeidet, bei dem also auch im Falle einer Unterbrechung des Netzwerks das Netzwerk ausfallsicher betrieben werden kann.
Diese Aufgabe wird erfindungsgemäß gelöst durch ein Netzwerk nach Anspruch 1 und ein Fahrzeug nach Anspruch 9. Vorteilhafte Weiterbildungen und Ausgestaltungen sind in den abhängigen Ansprüchen beschrieben.

Das Netzwerk zum Datenaustausch zwischen mehreren in einem Fahrzeug angeordneten Steuergeräten ist ringförmig und umfasst eine Ringverbindung und mehrere Verteiler. Jeder der Verteiler umfasst mehrere Kommunikationspaare, die jeweils eine Sendeeinheit und eine Empfangseinheit zum Senden und Empfangen von Daten umfassen. Jedes der Steuergeräte ist über ein erstes Kommunikationspaar mit einem der Verteiler und jeder der Verteiler über ein zweites Kommunikationspaar mit der Ringverbindung verbunden. Dadurch, dass mindestens einer der Verteiler zusätzlich ein drittes Kommunikationspaar aufweist und über das dritte Kommunikationspaar mit der Ringverbindung verbunden ist, wobei eine Datenflussrichtung in dem zweiten Kommunikationspaar und dem dritten Kommunikationspaar dieses Verteilers entgegengesetzt ist, kann auch bei einer Unterbrechung des ringförmigen Netzwerks der Datenfluss aufrechterhalten werden. Durch die Ringstruktur ist das Netzwerk somit fehlertolerant. Die Ringverbindung kann hierbei sowohl drahtgebunden, beispielsweise durch ein oder mehrere Kabel, eine Glasfaser oder mehrere Glasfasern, oder drahtlos (z. B. durch Funk, WLAN, Infrarot etc.) realisiert sein.

Typischerweise ist der mindestens eine der Verteiler dazu eingerichtet, bei der Unterbrechung der Ringverbindung die Datenflussrichtung durch diesen Verteiler umzuschalten. Sofern an einer bestimmten Stelle das Netzwerk nicht mehr funktioniert, kann durch den Verteiler mit dem dritten Kommunikationspaar die Datenflussrichtung je nach Bedarf gewählt werden, so dass ein Datenaustausch immer noch entlang der Ringverbindung in alle Richtungen möglich ist.

Vorzugsweise weisen sämtliche der Verteiler des Netzwerks das dritte Kommunikationspaar auf und sind über das dritte Kommunikationspaar mit der Ringverbindung verbunden. Hierdurch können bei der Unterbrechung der Ringverbindung von einem beliebigen der Verteiler aus die Daten in dem Netzwerk in die gewünschte Richtung weitergeleitet werden.

Die die jeweiligen Kommunikationspaare bildenden Sendeeinheiten und Empfangseinheiten können natürlich auch in einem Bauteil zusammengefasst sein, das dementsprechend sowohl sendet als auch empfängt. Hierdurch wird der Aufbau des Verteilers einfacher gehalten.

Das ringförmige Netzwerk kann auf Basis Ethernet realisiert sein, so dass dabei die bereits bekannten und in anderen Technikbereichen erprobten Eigenschaften dieses Netzwerktyps ausnutzen. Ethernet ist im Bereich von Multimedia und Telekommunikation weiterentwickelt worden und bietet kostengünstige, sehr leistungsfähige Funktionen an. Insbesondere werden Eigenschaften wie Datenübertragungsrate, Datenpaketgröße sowie technische Lösungen zur Verbesserung dieser Eigenschaften einem kontinuierlichem Wachstum und Weiterentwicklungen auch durch andere Branchen wie Multimedia unterstützt. Alternative Systeme zur Datenübertragung wie Most, CAN, Flexray etc. sind automotiv-spezifische Lösungen. Steuergeräte in einem Ethernetnetzwerk können untereinander synchronisiert werden, zentral von einer Stelle synchronisiert werden oder sogar extern getriggert werden. Weiter existiert die Möglichkeit, Echtzeitsysteme auf unterschiedlichen Zeitbasen zu synchronisieren, wobei die Datenkommunikation trotzdem einen für Sicherheitstechnik notwendigen Determinismus bereitstellt. Somit können auch unterschiedliche Echtzeitanforderungen in dem Netzwerk realisiert werden und sichere Funktionen für Lenksysteme in wenigen Millisekunden sichergestellt werden. Zum Beispiel kann ein Bremssystem mit einer Sicherheitszeit von 100 ms in einem Ringnetz sicherheitstechnisch hinreichend realisiert werden.

Es kann vorgesehen sein, dass die Steuergeräte vorzugsweise mindestens ein Motorsteuergerät, ein Bremsensteuergerät, ein Airbagsteuergerät, ein Lenkungssteuergerät und bzw. oder ein Gerät zur Anbindung eines weiteren Netzwerks umfassen. Die genannten Geräte können jeweils einen oder mehrere Aktuatoren und bzw. oder Sensoren ansteuern bzw. Signale von diesen empfangen. Hierdurch sind eine Vielzahl von üblicherweise in Fahrzeugen anzusteuernden Geräten und bzw. oder Aktuatoren durch das Netzwerk kontrollierbar. Zudem ist durch die Möglichkeit zur Anbindung weiterer Geräte oder Aktuatoren, wie z.B. von Kameras für eine Vorfeldsensorik, das Netzwerk beispielsweise über Peer-Verbindungen erweiterbar.

Alternativ oder zusätzlich kann die Ringverbindung, sofern sie drahtgebunden ausgeführt ist, ein mehradriges Kabel und bzw. oder einen Lichtwellenleiter umfassen. Hierdurch werden Bauteile bereitgestellt, die einen schnellen Datenfluss in mehrere Richtungen erlauben. Vorzugsweise ist daher die Datenflussrichtung in dem mehradrigen Kabel auch unterschiedlich auf den verschiedenen Kabeln. Eine Verdrahtung kann, je nach Anforderung an Entfernung, Zeit und Datenmengen, variabel gewählt werden und auch einfachste Twisted-Pair-Verdrahtungen erzielen schon bessere Performances als bisherige Bussysteme.

Typischerweise ist mindestens einer der Verteiler (z. B. ein Ethernet-Hub) in einer Kontrolleinheit oder in einem der Steuergeräte integriert, so dass ein platzsparender Aufbau, beispielsweise auf einer einzelnen Platine, möglich ist.

Vorzugsweise weist die Kontrolleinheit mehrere Kerne auf. Moderne Mikrocontroller als Kontrolleinheiten nutzen für eine höhere Performance, aber auch aus Sicherheitsgründen mehrere Rechenkerne. Weiter wird die Kommunikation in diesen Mikrocontrollern zwischen den Rechenkernen und der Peripherie bereits auch über redundante Switch-Technologie (wie Bus-Bar, Kommunikations-Bridges) realisiert. Diese Switch-Technologie ist ähnlich der Switches die auch in Ethernet verwendet werden. Es gibt auch bereits Automotiv-Controller, die einen Ethernet-Transceiver (Verteiler) integriert haben. Da bei diesem Rechner die gesamte Peripherie, Rechenkerne und alle internen Kommunikationen bereits unabhängig redundant realisiert werden, kann man hier auch bereits bei einem einzigen Mikrocontroller (MultiCore) eine redundante Ethernetanschaltung realisieren. Somit können die Nachteile eines Standard-Ethernet-Steckers wie dem RJ 45 auch in Bezug auf Verbindungstechnik bereits eliminiert werden.

Außerdem kann vorgesehen sein, dass die Ringverbindung einen ersten Kanal und einen zweiten Kanal sowie mehrere Verteiler umfasst, die das dritte Kommunikationspaar aufweisen. Jeweils das zweite Kommunikationspaar der Verteiler ist mit dem ersten Kanal und jeweils das dritte Kommunikationspaar der Verteiler mit dem zweiten Kanal verbunden. Die Ringverbindung kann auch in diesem Fall drahtgebunden oder drahtlos ausgeführt sein. Insbesondere kann einer der beiden Kanäle drahtgebunden sein, während der andere Kanal drahtlos realisiert ist. Dadurch, dass die Ringverbindung aus zwei Kanälen besteht, ist die Gefahr eines durch einen Leitungsbruch verursachten Ausfalls des Netzwerks minimiert, da gegebenenfalls einer der Kanäle noch intakt ist. Durch die Verbindung der Kommunikationspaare ist jedoch selbst bei einem Leitungsbruch die volle Funktionalität der Ringverbindung und somit des ringförmigen Netzwerks gewährleistet. Vorzugsweise ist die Datenflussrichtung auf dem ersten Kanal entgegengesetzt zu der Datenflussrichtung des zweiten Kanals. Das Ringnetzwerk kann auch unabhängig redundant ausgeführt werden, beispielsweise durch zwei voneinander getrennte Ringe des Netzwerks.

Das ringförmige Netzwerk mit den beschriebenen Eigenschaften wird typischerweise in einem Fahrzeug eingesetzt, aber auch externe Steuerungseinheiten können über Funktechnik eingebunden werden.

Da Ethernet große Datenpakete übertragen kann und ein solches redundantes Ethernet in der Ringstruktur hochverfügbar und sicher ist, können auch Funktionen und bzw. oder Anwendungsprogramme auch in verschiedenen Kontrolleinheiten oder Steuergeräten realisiert werden. Hierdurch muss eine Anwendungssoftware nicht mehr in dem Steuergerät oder der Kontrolleinheit gespeichert werden, in dem sie auch abläuft. Vielmehr kann das ringförmige Netzwerk dazu eingerichtet sein, die Funktionen bzw. Anwendungsprogramme einer der Kontrolleinheiten oder einem der Steuergeräte zuzuweisen. Bestimmte Funktionen können sogar je nach Bedarf in verschiedene der Steuergeräte oder der Kontrolleinheiten geladen werden, sodass auch bei Ausfall von ganzen Steuergeräten oder Kontrolleinheiten eine sichere Funktion gewährleistet werden kann. Auch können solche Funktionen in verschiedenen Steuergeräten oder Kontrolleinheiten redundant gespeichert werden, um bestimmte Notfallszenarien realisieren zu können.

Auch bietet ein geswitchtes Ethernet eine vergleichbare Datenkommunikation, wie man sie heute aus dem Internet kennt, das heißt, man stellt die Daten eines Sensors dem Netz zur Verfügung. Diese Daten werden nach Möglichkeit über die schnellste Verbindung zu einem Adressaten gesendet und wenn das erste korrekte Datenpaket ankommt, können spätere Datenpakete verworfen werden und zum sicheren Plausibilisieren der Daten genutzt werden.

Weiter können diese Daten verschlüsselt werden und über einen sogenannten Tunnel oder ein Tunnelprotokoll (vergleichbar mit VPN im Internet) unabhängig im Netz übertragen werden. Somit kann man wesentliche Fehlermodelle bei der Kommunikation vermeiden und die für die Sicherheitstechnik notwendige Unabhängigkeit dargestellt werden. Das Tunnelprotokoll kann auch eingerichtet sein, eine Zuordnung von Kommunikationsteilnehmern zu steuern. Es kann auch vorgesehen sein, die über das Netzwerk zu kommunizierenden Daten nicht einem bestimmten Kommunikationsteilnehmer zur Verfügung zu stellen, sondern allgemein dem Netzwerk zur Verfügung zu stellen, sodass jeder dazu berechtigte Kommunikationsteilnehmer diese Daten nutzen kann.

Ausführungsbeispiele der Erfindung sind in den Zeichnungen dargestellt und werden nachfolgend anhand der Figuren 1 bis 5 beschrieben.

Es zeigen:
- Fig. 1: eine schematische Darstellung eines ringförmigen Netzwerks in einem Fahrzeug;
- Fig. 2: eine schematische Ansicht eines Verteilers des Netzwerks;
- Fig. 3: eine Fig. 1 entsprechende Darstellung des ringförmigen Netzwerks mit einem Leitungsbruch;
- Fig. 4: eine Fig. 1 entsprechende Darstellung des ringförmigen Netzwerks mit einer Ringverbindung mit zwei Kanälen und
- Fig. 5: ein weiteres Ausführungsbeispiel eines Netzwerks mit einer Ringverbindung mit zwei Kanälen und mehreren Kontrolleinheiten.

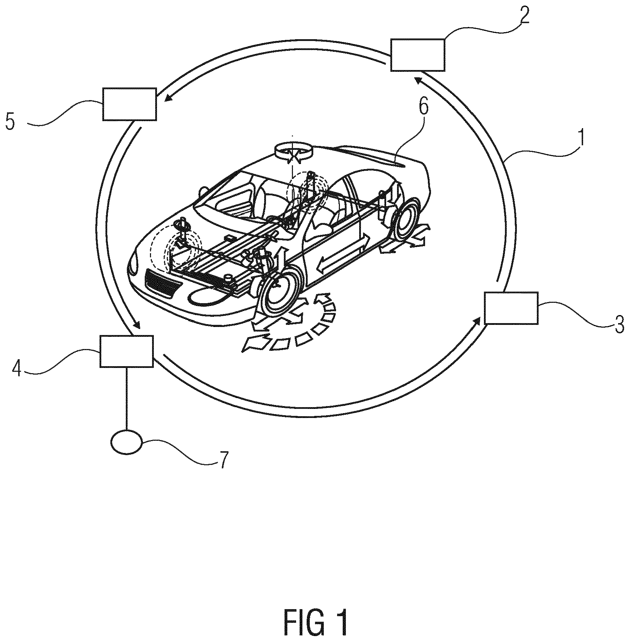

Fig. 1 zeigt in einer schematischen Ansicht ein ringförmiges Netzwerk, das eine einkanalige Ringverbindung 1 umfasst. Das Netzwerk ist in einem Fahrzeug 6, im dargestellten Ausführungsbeispiel einem Personenkraftfahrzeug, angeordnet und verbindet über die Ringverbindung 1 mehrere Steuergeräte, nämlich ein Bremsensteuergerät 2, ein Airbagsteuergerät 3, ein Lenkungssteuergerät 4 und ein Motorsteuergerät 5 miteinander. Die genannten Geräte sind jeweils über einen Verteiler, der auch als Switch bezeichnet wird, mit der Ringverbindung 1 verbunden.

Die Geräte 2, 3, 4, 5 steuern jeweils verschiedene Aktuatoren, die auch als Aktoren bezeichnet werden, und empfangen Daten von Sensoren. Das Bremsensteuergerät 2 steuert die Bremsen und weitere Regelfunktionen wie ein Antiblockiersystem (ABS) und ein elektronisches Stabilitätsprogramm (ESP). Außerdem liefert das Bremsensteuergerät 2 Informationen über eine Raddrehzahl, eine Gierrate und Beschleunigungswerte. Eine Crash-Sensorik ist in dem Airbagsteuergerät 3 enthalten. Neben einer Einstellung einer Lenkung ermittelt das Lenkungssteuergerät 4 auch einen Lenkwinkel, einen Lenkradwinkel sowie Lenkmomente. Das Motorsteuergerät 5 stellt ein Motormoment ein und liefert Informationen bezüglich einer Motorleistung und Drehzahl.

Durch die Ringverbindung 1 sind sämtliche Sensorinformationen und sämtliche Aktuatordaten im gesamten Netzwerk verfügbar. Durch eine Ringstruktur des Netzwerks kann eine beliebige Busverbindung der Verteiler ausfallen, ohne dass ein Funktionsverlust eintritt. Unter einer Busverbindung soll hierbei jede Verbindung des Verteilers zur Ringverbindung 1 verstanden werden.

Über einen an dem Lenkungssteuergerät 4 angebrachten Stecker 7 als Peer-Anbindung können weitere Sensoren Teil des Netzwerks werden. Beispielsweise kann eine Vorfeldsensorik mit einer Kamera und einem Radargerät als Teil eines Fahrassistenzsystems an das Netzwerk angeschlossen werden. Zusätzliche Sensoren können aber natürlich auch über andere physikalische Realisierungen in das Netzwerk integriert werden.

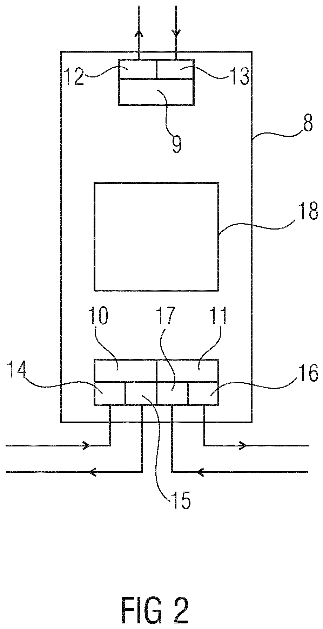

Das Netzwerk basiert auf Ethernet und bildet somit ein Ethernet geswitchtes Ringnetzwerk. In dem geswitchten Netzwerk können die Steuergeräte 2, 3, 4, 5 alle Aktuatoren unabhängig voneinander ansteuern und auch alle Daten (also Sensordaten, Zustände der Geräte 2, 3, 4, 5 und der Aktuatoren sowie Diagnosefunktionen) aus dem Netzwerk zur Verfügung stellen. Aufgrund der Verwendung von Ethernet kann durch eine zentrale Synchronisierung aller Geräte 2, 3, 4, 5 auch sichergestellt werden, dass alle Daten zuverlässig verfügbar sind. Durch die Ringstruktur ist das Netzwerk fehlertolerant und an jeder Stelle der Ringverbindung 1 kann eine Unterbrechung kontrolliert werden. Sämtliche zeitliche Anforderungen können bei heutiger Switch-Technik aufrechterhalten werden. Das Netzwerk selbst ist in dem dargestellten Ausführungsbeispiel auf einem im Automotivbereich modernen Mikrocontroller (MultiCore) integriert, wobei die Ringverbindung 1 durch ein Kabel oder eine Leiterbahn realisiert ist. Die Daten fließen auf der Ringverbindung 1 entgegen dem Uhrzeigersinn, können in weiteren Ausführungsformen aber auch im Uhrzeigersinn von Gerät zu Gerät fließen. Durch ein Verwenden von Komponenten und Architekturen, die sich in anderen Industrien bereits bewährt haben, ist ein Risiko eines Ausfalls bei einem Einsatz dieser Komponenten und Architekturen im Automobilbereich geringer. Auch das Verhalten im Fehlerfall kann auf Basis von Wissen in anderen Industrien hinreichend sicher bewertet werden. Fig. 2 stellt in schematischer Ansicht einen der Verteiler 8 (beispielsweise einen Transceiver; einen physikalischer Datenempfänger oder einen Sender (Basis: xBaseTx)) dar, über den die Geräte 2, 3, 4, 5 mit der Ringverbindung 1 verbunden sind. Wiederkehrende Merkmale sind in dieser wie auch in den folgenden Zeichnungen mit identischen Bezugszeichen versehen. Der Verteiler 8 ist ein Ethernet-Switch und verfügt über einen ersten Port 9, einen zweiten Port 10 und einen dritten Port 11. Jeder der Ports 9, 10, 11 weist eine Sendeeinheit und eine Empfangseinheit auf, die je nach Ausführungsform jeweils als getrennte Bauteile oder als ein einzelnes Bauteil ausgeführt sein können. Die Sendeeinheit 12 des Ports 9 sendet Daten an eines der Geräte 2, 3, 4, 5, während die Empfangseinheit 13 von dem jeweiligen der Geräte 2, 3, 4, 5 kommende Daten empfängt. Der Port 9 bildet durch die Sendeeinheit 12 und die Empfangseinheit 13 somit ein Kommunikationspaar, über das der Verteiler 8 mit einem der Geräte 2, 3, 4, 5 beispielsweise über einen Standard-Ethernet-Stecker, wie einen RJ 45-Stecker, verbunden ist.

Der zweite Port 10 weist ebenfalls eine Sendeeinheit 15 und eine Empfangseinheit 14 auf. Die Sendeeinheit 15 sendet Daten von dem Verteiler 8 an die Ringverbindung 1, während die Empfangseinheit 14 Daten von der Ringleitung 1 empfängt. Der dritte Port 11 umfasst eine Sendeeinheit 16 und eine Empfangseinheit 17, die ebenfalls von der Ringverbindung 1 Daten empfangen bzw. an diese senden. Der Port 10 mit der Sendeeinheit 15 und der Empfangseinheit 14 bildet somit ein zweites Kommunikationspaar, während der Port 11 mit der Sendeeinheit 16 und der Empfangseinheit 17 ein drittes Kommunikationspaar bildet.

Eine Datenflussrichtung in dem zweiten Port 10 ist verschieden zu einer Datenflussrichtung in dem dritten Port 11, im vorliegenden Ausführungsbeispiel sind die Datenflussrichtungen entgegengesetzt zueinander. Eine Richtung, aus der die Empfangseinheit 14 die Daten empfängt, ist entgegengesetzt zu einer Richtung, aus der die Empfangseinheit 17 die Daten von der Ringverbindung 1 empfängt. Ebenso sendet die Sendeeinheit 15 die Daten in eine entgegengesetzte Richtung als die Sendeeinheit 16. Über eine Vermittlungseinheit 18 sorgt der Verteiler 8 für eine entsprechende Weiterleitung der Daten und einen Austausch der Daten zwischen der Ringverbindung 1 und dem mit dem jeweiligen Verteiler 8 verbundenen Gerät. Die Vermittlungseinheit 18 kann beispielsweise durch eine Logikschaltung realisiert sein. Sämtliche Bauteile des Verteilers 8 sind auf einer einzigen Platine kombiniert.

Die Vermittlungseinheit 18 ist programmiert, die Datenflussrichtung durch den Verteiler 8 umzuschalten. Hierzu kann zwischen einer Verwendung der Ports 10 und 11 hin- und her geschaltet werden, es kann aber auch die Empfangseinheit 17 zusammen mit der Sendeeinheit 15 verwendet werden und die Empfangseinheit 14 und die Sendeeinheit 16 deaktiviert sein. Natürlich kann auch die Empfangseinheit 14 und die Sendeeinheit 16 aktiviert werden und die Empfangseinheit 17 und die Sendeeinheit 15 ausgeschaltet werden.

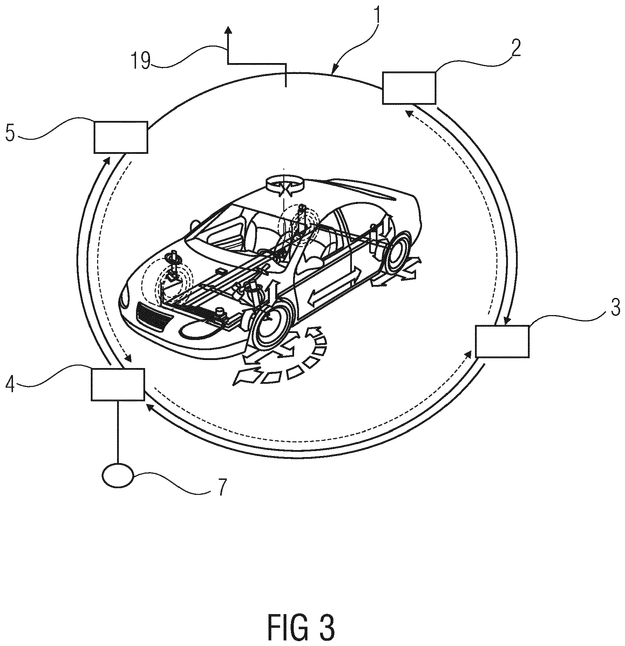

In Fig. 3 ist in einer Fig. 2 entsprechenden Darstellung das ringförmige Netzwerk nach einem Leitungsbruch 19 der Ringverbindung 1 zwischen dem Motorsteuergerät 5 und dem Bremsensteuergerät 2 gezeigt. Der Leitungsbruch 19 kann in einem Trennen des die Ringverbindung bildenden Kabels bestehen oder, im Falle einer drahtlos realisierten Ringverbindung 1, in einer Unterbrechung der drahtlosen Verbindung beispielsweise durch ein Störsignal. Die ursprünglich entgegen dem Uhrzeigersinn auf der Ringverbindung 1 zirkulierenden Daten können nun also nicht von dem Bremsensteuergerät 2 zu dem Motorsteuergerät 5 gelangen. Sobald der Leitungsbruch 19 erkannt wurde, schalten die Verteiler 8 über die Vermittlungseinheit 18 die Datenflussrichtung bedarfsweise um, sodass die Daten nun auch auf der Ringverbindung 1 im Uhrzeigersinn von dem Bremsensteuergerät 2 zu dem Motorsteuergerät 5 gelangen können. Ein Umschalten kann hierbei durch ein sogenanntes "Fast Recovery Protocol" erfolgen, das einerseits den Leitungsbruch 19 sowie dessen Position in Echtzeit erkennt und nachfolgend einen alternativen Kommunikationsweg im Netzwerk freischaltet. Bereits bei der in Fig. 3 dargestellten einkanaligen Architektur des Netzwerks wird somit eine Verfügbarkeit der Daten im Netzwerk erhöht. Durch den an einer beliebigen Stelle des Netzwerks auftretenden Leitungsbruch 19 werden alle Kommunikationsverbindungen aufrecht erhalten und es tritt kein Funktionsverlust des Netzwerks auf. Eine Umschaltung der Datenflussrichtung erfolgt hierbei unterbrechungsfrei, d.h. innerhalb weniger, typischerweise innerhalb von maximal 5 µs. Datenlaufzeiten bleiben auch bei einem Leitungsbruch annähernd deterministisch. Durch das "Fast Recovery Protocol" können Fehler in der Kommunikation detektiert werden und alternative Kommunikationswege werden umgehend freigeschaltet. Auf Basis dieses Determinismus kann, auch im Fehlerfall, das Degradationskonzept für das Gesamtfahrzeug ausgelegt werden. Hierdurch kann eine weitgehend unterbrechungsfreie Umsetzung der sicherheitsrelevanten Funktionen auf den Steuergeräten 2, 3, 4, 5 gewährleistet werden.

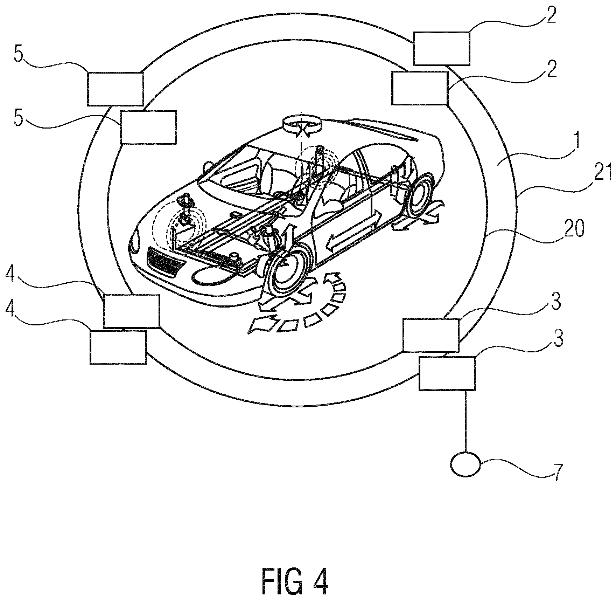

Fig. 4 zeigt in einer Fig. 1 entsprechenden Darstellung das ringförmige Netzwerk, wobei die Ringverbindung 1 nun als mehrkanalige Ringverbindung mit einer ersten Leitung 20 als erstem Kanal für Datenfluss in eine erste Richtung und einer zweiten Leitung 21 als zweiten Kanal für Datenfluss in eine zweite Richtung ausgeführt ist. Die erste Richtung ist der zweiten Richtung üblicherweise entgegengesetzt. Die Geräte 2, 3, 4, 5 sind jeweils mit der ersten Leitung 20 und der zweiten Leitung 21 verbunden. Über den Stecker 7, der nun, anders als in dem in Fig. 1 gezeigten Ausführungsbeispiel an dem Airbagsteuergerät 3 angeordnet ist, kann wiederum über eine Peer-Verbindung ein weiteres Netzwerk mit dem ringförmigen Netzwerk verbunden werden. Die Ringverbindung 1 ist als mehradriges Kabel ausgeführt, wobei die erste Leitung 20 und die zweite Leitung 21 jeweils Adern dieses Kabels bilden und die Ringverbindung 1 ein twisted-pair-Kabel ist. Alternativ oder zusätzlich kann die Ringverbindung 1 auch durch Lichtwellenleiter realisiert sein oder diese zumindest umfassen. In diesem Fall wird lediglich ein Lichtwellenleiter als Ringverbindung 1 verwendet, wobei der Datenfluss auf dem ersten Kanal durch eine erste optische Wellenlänge und der Datenfluss auf dem zweiten Kanal durch eine zweite optische Wellenlänge gegeben ist. In weiteren Ausführungsbeispielen können natürlich auch zwei Lichtwellenleiter für jeweils einen der Kanäle vorgesehen sein. In weiteren Ausführungsformen kann sowohl die einkanalige oder mehrkanalige Ringverbindung 1 durch eine drahtlose Verbindung, beispielsweise eine Funkverbindung oder eine Infrarotverbindung realisiert sein. Im Fall der mehrkanaligen Verbindungsleitung 1 können die unterschiedlichen Kanäle auch auf unterschiedlichen Übertragungsarten beruhen, also beispielsweise der erste Kanal drahtgebunden sein und der zweite Kanal eine Funkverbindung umfassen.

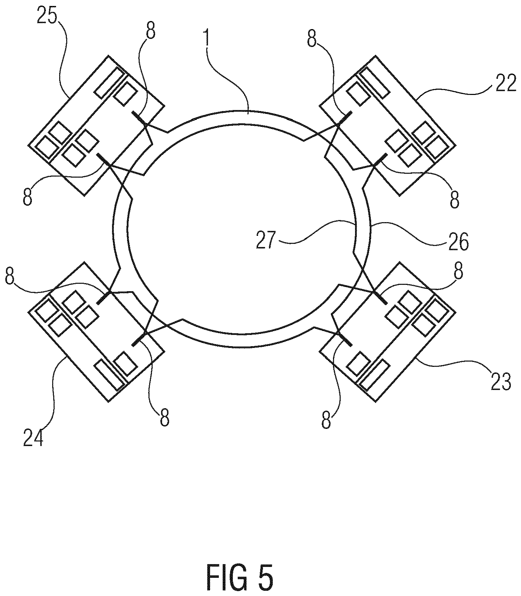

Ein weiteres Ausführungsbeispiel des ringförmigen Netzwerks ist in Fig. 5 als redundantes Netzwerk dargestellt. Kontrolleinheiten mit mehreren Prozessorkernen wie Multicore-Controller sind in der Lage, Ethernet-Switches zu integrieren. Auch existieren redundante Multicore-Konzepte, die beispielsweise jeweils 2 Kerne im Lockstep (2 Kerne redundant gekoppelt) für eine höhere Verfügbarkeit und damit eine erhöhte Fehlertoleranz unterstützen.

Bei dem in Fig. 5 gezeigten Ausführungsbeispiel sind daher die Geräte 2, 3, 5, 6 jeweils auf einer der Kontrolleinheiten 22, 23, 24, 25 angeordnet. Neben weiteren Funktionseinheiten, wie etwa einem CAN-Bus, Bauteilen für eine Bluetooth-Verbindung, eine LAN-Verbindung und weiteren Bus-Verbindungen, weisen die Kontrolleinheiten auch jeweils zwei der Verteiler 8 auf. Die Kontrolleinheiten 22, 23, 24, 25 sind räumlich von den Geräten 2, 3, 4, 5 separiert, können in weiteren Ausführungsbeispielen aber auch als ein Bauteil mit diesen kombiniert sein.

Die Ringverbindung 1 ist wiederum als Ringverbindung mit zwei Kanälen aus zwei unabhängig voneinander realisierten Lichtwellenleitern 26 und 27 aufgebaut. Einer der Verteiler 8 auf den Kontrolleinheiten 22, 23, 24, 25 ist mit dem ersten Lichtwellenleiter 26 verbunden, der jeweils andere der Verteiler 8 mit dem zweiten Lichtwellenleiter 27. In weiteren Ausführungsformen kann der Verteiler auch Teil der Steuergeräte 2, 3, 4, 5 sein. Das Netzwerk ist wiederum vom Typ Ethernet, sodass alle Kontrolleinheiten 22, 23, 24, 25 auf eine gemeinsame Zeitbasis synchronisiert werden und das Ethernet redundant an die Kontrolleinheiten 22, 23, 24, 25 angebunden werden. Es können daher berechenbare Sicherheitszeichen definiert werden für alle Sicherheitsfunktionen, die über das Netzwerk laufen. Durch die Kontrolleinheiten 22, 23, 24, 25 wird eine einheitliche Kommunikation aller Geräte 2, 3, 4, 5 des Netzwerks ermöglicht.

Außerdem können Datenpakete die volle Bandbreite des Ethernet nutzen und sind hierdurch für jede Steuerung in sehr kurzer Zeit verfügbar. Das gesamte ringförmige Netzwerk läuft unter einem festen Zeitgitter, sodass alle Kontrolleinheiten 22, 23, 24, 25 auf einer gemeinsamen Zeitbasis synchronisiert werden. Es können daher berechenbare Sicherheitszeichen für alle Sicherheitsfunktionen, die über das Netzwerk laufen, definiert werden.

Durch ein Tunnelprotokoll wird eine Zuordnung von Kommunikationsteilnehmern gesteuert und die über das Netzwerk zu kommunizierenden Daten werden nicht einem bestimmten der Steuergeräte 2, 3, 4, 5 als Kommunikationsteilnehmer, sondern allgemein dem Netzwerk zur Verfügung gestellt. Eine Anwendungssoftware ist in einem der Steuergeräte 2, 3, 4, 5 bzw. einer der Kontrolleinheiten 22, 23, 24, 25 gespeichert, wird jedoch über das Netzwerk für alle der genannten Geräte bereitgestellt.

Lediglich in einzelnen der Ausführungsbeispiele offenbarte Merkmale der verschiedenen Ausführungsformen können miteinander kombiniert und einzeln beansprucht werden.

## Patentansprüche

1. Ringförmiges Netzwerk zum Datenaustausch zwischen mehreren in einem Fahrzeug (6) angeordneten Steuergeräten (2; 3; 4; 5), umfassend
- eine Ringverbindung (1) und
- mehrere Verteiler (8) mit jeweils mehreren, jeweils eine Sendeeinheit (12; 15; 16) und eine Empfangseinheit (13; 14; 17) zum Senden und Empfangen von Daten umfassenden Kommunikationspaaren (9; 10; 11), und wobei jedes der Steuergeräte (2; 3; 4; 5) über ein erstes Kommunikationspaar (9) mit einem der Verteiler (8) und jeder der Verteiler (8) über ein zweites Kommunikationspaar (10) mit der Ringverbindung (1) verbunden ist, und
mindestens einer der Verteiler (8) zusätzlich ein drittes Kommunikationspaar (11) aufweist und über das dritte Kommunikationspaar (11) mit der Ringverbindung verbunden ist,
wobei eine Datenflussrichtung in dem zweiten Kommunikationspaar (10) und dem dritten Kommunikationspaar (11) dieses Verteilers (8) entgegengesetzt ist und
wobei der mindestens eine Verteiler (8) eingerichtet ist, bei einer Unterbrechung (19) der Ringverbindung (1) die Datenflussrichtung durch diesen Verteiler (8) umzuschalten,
**dadurch gekennzeichnet, dass** die Umschaltung durch ein sogenanntes "Fast Recovery Protocol" erfolgt, das einerseits der Unterbrechung (19) sowie dessen Position in Echtzeit erkennt und nachfolgend einen alternativen Kommunikationsweg im Netzwerk freischaltet.

2. Ringförmiges Netzwerk nach Anspruch 1, **dadurch gekennzeichnet, dass** es ein Ethernet ist.

3. Ringförmiges Netzwerk nach Anspruch 2, **dadurch gekennzeichnet, dass** mindestens zwei der Steuergeräte (2; 3; 4; 5) des Netzwerks, vorzugsweise alle der Steuergeräte (2; 3; 4; 5) miteinander synchronisiert sind.

4. Ringförmiges Netzwerk nach einem der vorhergehenden Ansprüche, **dadurch gekennzeichnet, dass** die Steuergeräte mindestens ein Motorsteuergerät (5), ein Bremsensteuergerät (2), ein Airbagsteuergerät (3), ein Lenkungssteuergerät (4) und/oder ein Gerät (7) zur Anbindung eines weiteren Netzwerks umfassen.

5. Ringförmiges Netzwerk nach einem der vorhergehenden Ansprüche, **dadurch gekennzeichnet, dass** die Ringverbindung (1) ein mehradriges Kabel und/oder einen Lichtwellenleiter umfasst, wobei vorzugsweise die Datenflussrichtung in dem mehradrigen Kabel unterschiedlich auf den verschiedenen Adern ist und das mehradrige Kabel besonders vorzugsweise ein twisted-pair-Kabel ist.

6. Ringförmiges Netzwerk nach einem der vorhergehenden Ansprüche, **dadurch gekennzeichnet, dass** mindestens einer der Verteiler (8) in einer Kontrolleinheit (22; 23; 24; 25), vorzugsweise einer Kontrolleinheit (22; 23; 24; 25) mit mehreren Kernen, integriert ist.

7. Ringförmiges Netzwerk nach einem der vorhergehenden Ansprüche, **dadurch gekennzeichnet, dass** die Ringverbindung (1) einen ersten Kanal (20) und einen zweiten Kanal (21) sowie mehrere Verteiler (8) mit dem dritten Kommunikationspaar (11) umfasst, wobei jeweils das zweite Kommunikationspaar (10) der Verteiler (8) mit dem ersten Kanal (20) und jeweils das dritte Kommunikationspaar (11) der Verteiler (8) mit der zweiten Leitung (21) verbunden ist.

8. Ringförmiges Netzwerk nach einem der vorhergehenden Ansprüche, **dadurch gekennzeichnet, dass** das Netzwerk eingerichtet ist, Anwendungsprogramme den Steuergeräten (2; 3; 4; 5) im laufenden Betrieb zuzuweisen.

9. Fahrzeug (6), vorzugsweise Kraftfahrzeug, mit einem ringförmigen Netzwerk nach einem der vorhergehenden Ansprüche.

## Claims

1. Ring network for transferring data between a plurality of electronic control modules (2; 3; 4; 5) arranged in a vehicle (6), which ring network comprises
- a ring connection (1) and
- a plurality of network switches (8), each comprising a plurality of communications pairs (9; 10; 11), which each comprise a transmit unit (12; 15; 16) and a receive unit (13; 14; 17) for transmitting and receiving data, and wherein each of the electronic control modules (2; 3; 4; 5) is connected to one of the network switches (8) via a first communications pair (9), and each of the network switches (8) is connected to the ring connection (1) via a second communications pair (10), and
at least one of the network switches (8) additionally comprises a third communications pair (11) and is connected to the ring connection (1) via the third communications pair (11),
wherein a data flow direction is opposite in the second communications pair (10) and the third communications pair (11) of this network switch (8) and
wherein the at least one network switch (8) is configured to reverse the data flow direction through this network switch (8) when there is a break (19) in the ring connection (1), **characterized in that** the reversal is effected by means of what is known as a "fast recovery protocol", which firstly detects the break (19) and the position thereof in real time and subsequently enables an alternative communications path in the network.

2. Ring network according to Claim 1, **characterized in that** it is an Ethernet.

3. Ring network according to Claim 2, **characterized in that** at least two of the electronic control modules (2; 3; 4; 5) of the network, preferably all the electronic control modules (2; 3; 4; 5), are synchronized with one another.

4. Ring network according to any of the preceding claims, **characterized in that** the electronic control modules include at least one engine control module (5), a brake control module (2), an airbag control module (3), a steering control module (4) and/or a module (7) for interfacing to another network.

5. Ring network according to any of the preceding claims, **characterized in that** the ring connection (1) comprises a multicore cable and/or a fibre-optic cable, wherein preferably the data flow direction in the multicore cable differs on the different wires, and more preferably the multicore cable is a twisted-pair cable.

6. Ring network according to any of the preceding claims, **characterized in that** at least one of the network switches (8) is integrated in a control unit (22; 23; 24; 25), preferably a control unit (22; 23; 24; 25) having a plurality of cores.

7. Ring network according to any of the preceding claims, **characterized in that** the ring connection (1) comprises a first channel (20) and a second channel (21) and a plurality of network switches (8) which comprise the third communications pair (11), wherein the second communications pair (10) of each of the network switches (8) is connected to the first channel (20), and the third communications pair (11) of each of the network switches (8) is connected to the second line (21).

8. Ring network according to any of the preceding claims, **characterized in that** the network is configured to allocate application software to the electronic control modules (2; 3; 4; 5) during operation.

9. Vehicle (6), preferably motor vehicle, having a ring network according to any of the preceding claims.

## Revendications

1. Réseau en forme d'anneau destiné à l'échange de données entre plusieurs contrôleurs (2 ; 3 ; 4 ; 5) disposés dans un véhicule (6), comprenant
- une liaison en anneau (1) et
- plusieurs répartiteurs (8) ayant respectivement plusieurs paires de communication (9 ; 10 ; 11), comprenant respectivement une unité d'émission (12 ; 15 ; 16) et une unité de réception (13 ; 14 ; 17) destinées à émettre et à recevoir des données, et
chacun des contrôleurs (2 ; 3 ; 4 ; 5) étant relié par le biais d'une première paire de communication (9) à l'un des répartiteurs (8) et chacun des répartiteurs (8) par le biais d'une deuxième paire de communication (10) à la liaison en anneau (1), et
au moins l'un des répartiteurs (8) possédant en plus une troisième paire de communication (11) et étant relié à la liaison en anneau par le biais de la troisième paire de communication (11),
une direction de flux de données dans la deuxième paire de communication (10) et la troisième paire de communication (11) de ce répartiteur (8) étant opposées et
l'au moins un répartiteur (8) étant conçu pour, en cas d'interruption (19) de la liaison en anneau (1), inverser la direction de flux de données à travers ce répartiteur (8), **caractérisé en ce que** l'inversion s'effectue par un protocole dit de rétablissement rapide qui, d'une part, reconnaît l'interruption (19) ainsi que sa position en temps réel et libère ensuite un trajet de communication alternatif dans le réseau.

2. Réseau en forme d'anneau selon la revendication 1, **caractérisé en ce qu'**il s'agit d'un réseau Ethernet.

3. Réseau en forme d'anneau selon la revendication 2, **caractérisé en ce qu'**au moins deux des contrôleurs (2 ; 3 ; 4 ; 5) du réseau, de préférence tous les contrôleurs (2 ; 3 ; 4 ; 5) sont synchronisés entre eux.

4. Réseau en forme d'anneau selon l'une des revendications précédentes, **caractérisé en ce que** les contrôleurs comprennent au moins un contrôleur de moteur (5), un contrôleur de frein (2), un contrôleur de coussin gonflable de sécurité (3), un contrôleur de direction (4) et/ou un appareil (7) destiné à la connexion d'un réseau supplémentaire.

5. Réseau en forme d'anneau selon l'une des revendications précédentes, **caractérisé en ce que** la liaison en anneau (1) comporte un câble multifilaire et/ou une fibre optique, la direction de flux de données dans le câble multifilaire étant de préférence différente sur les différents fils et le câble multifilaire étant de préférence un câble à paires torsadées.

6. Réseau en forme d'anneau selon l'une des revendications précédentes, **caractérisé en ce qu'**au moins l'un des répartiteurs (8) est intégré dans une unité de contrôle (22 ; 23 ; 24 ; 25), de préférence une unité de contrôle (22 ; 23 ; 24 ; 25) comprenant plusieurs cœurs.

7. Réseau en forme d'anneau selon l'une des revendications précédentes, **caractérisé en ce que** la liaison en anneau (1) comporte un premier canal (20) et un deuxième canal (21) ainsi que plusieurs répartiteurs (8) munis de la troisième paire de communication (11), la deuxième paire de communication (10) des répartiteurs (8) étant respectivement reliée au premier canal (20) et la troisième paire de communication (11) des répartiteurs (8) à la deuxième ligne (21).

8. Réseau en forme d'anneau selon l'une des revendications précédentes, **caractérisé en ce que** le réseau est conçu pour affecter des programmes d'application aux contrôleurs (2 ; 3 ; 4 ; 5) en cours de fonctionnement.

9. Véhicule (6), de préférence véhicule automobile, comprenant un réseau en forme d'anneau selon l'une des revendications précédentes.
